# EUROPEAN PATENT APPLICATION

(11) **EP 2 163 976 A2**
(43) Date of publication of application: **17.03.2010**
(21) Application number: 09010347.4
(22) Date of filing: 11.08.2009
(51) Int. Cl.: G06F 3/048

(54) **Menu display device and menu display method**

(30) Priority: 26.08.2008 JP 2008216253
(71) Applicant: Alpine Electronics, Inc., Tokyo (JP)
(72) Inventor: Kimoto, Takeshi, Iwaki-city Fukushima (JP)
(74) Representative: Klunker . Schmitt-Nilson . Hirsch

(57) **Abstract**

A menu display device (100) includes a display unit (31) that displays a plurality of menu options (36) side by side on a display screen, a storage unit that stores the menu options and operational commands (34) for specifying operations corresponding to the menu options, and a control unit that displays the menu options and displays the operational commands adjacent to the menu options, the operational commands controlling display of the menu options. The control unit moves a mark (37) that indicates a selectable state between the menu options or the operational commands in response to an amount of operation of an operation unit (32), and when the mark moves to the operational commands, the control unit displays new menu options on the display screen in response to the operational commands.

## Description

### BACKGROUND OF THE INVENTION

### 1. Field of the Invention

The present invention relates to menu display devices and menu display methods, and in particular, relates to a menu display device provided with a user interface for selecting an option using a control and a menu display method.

### 2. Description of the Related Art

Recently, devices in which a plurality of functions are integrated have come into use as in-vehicle electronic equipment. The plurality of functions include, for example, a navigation function, a function of receiving radio broadcasts, television broadcasts, and the like, and a function of playing back content such as music and video. Moreover, as the capacity of storage media has become large, storage of a large volume of information such as music data has been enabled. Thus, a menu screen is displayed so that a user can readily select a function, a piece of data, and the like from such functions and data and the like.

In general, when many menu options exist on such a menu screen and thus it is difficult to display all the menu options at the same time on the menu screen, a comprehensible menu is constructed by, for example, grouping or hierarchically organizing the menu options to be displayed on a display screen.

Japanese Unexamined Patent Application Publication No. 2006-268295 discloses a user interface display device as a device for displaying such menu options. The user interface display device displays icons for a plurality of folders at an upper hierarchical level in a predetermined area and thumbnails for a plurality of files at a lower hierarchical level in another predetermined area, the files corresponding to one of the folders at a predetermined position so as to enable quick and exact selection of a desired file.

A comprehensible menu screen on which a desired menu option can be selected in a short time can be constructed by, for example, hierarchically organizing menu options, as described above.

However, even in a case where menu options are hierarchically organized, when a screen is small like a display screen of a portable device, an in-vehicle device, or the like, the number of menu options that can be displayed at the same time is limited, and thus an operation of displaying new menu options needs to be repeated in order to select a desired menu option. When a rotary control is used for this operation, rotation needs to be repeated many times, and thus the usability for users is impaired. As the number of menu options that belong to the same hierarchical level increases, the number of times this operation is performed increases, and thus it takes time to select a desired menu option.

Moreover, in addition to a rotary control, another control that has a function, for example, fast forwarding or rewinding, may be used. However, since a plurality of controls are used to select a menu option, the usability is poor, and the operation is troublesome. The use of such a display device in a vehicle not only troubles a driver, but hinders the operation. Thus, safe travelling may be hindered.

### SUMMARY OF THE INVENTION

In view of the aforementioned problems, it is an object of the present invention to provide a menu display device provided with an interface on which a menu option can be searched for and selected by a simple operation without using a plurality of controls and a menu display method.

A first aspect of the present invention provides a menu display device that includes a display unit that displays a plurality of menu options side by side on a display screen, a storage unit that stores the menu options and operational commands for specifying operations corresponding to the menu options, and a control unit that displays the menu options and displays the operational commands adjacent to the menu options, the operational commands controlling display of the menu options.

In the menu display device according to the first aspect of the present invention, an operation unit may be further provided. The control unit may move a mark that indicates a selectable state between the menu options or the operational commands in response to an amount of operation of the operation unit, and when the mark moves to the operational commands, the control unit may display new menu options on the display screen in response to the operational commands. The operation unit may be a rotary control, a sliding key, or a touch panel. The menu options may be moved in a predetermined direction in response to the operational commands, with respective orders of the menu options in sequence being kept, so that a plurality of new menu options are displayed side by side. The menu options may be expressed by icons that indicate content of the menu options, and the menu options may be displayed so that the menu options are arranged in a list or a circle on a selectable menu display area.

In the menu display device according to the first aspect of the present invention, operational commands for manipulating menu options are displayed adjacent to an area where the menu options are displayed. The operational commands can be selected and executed by operating the operation unit (for example, a rotary control), as is the case with the menu options. Thus, a menu option can be readily searched for and selected without using a plurality of operation units. When such a menu display device is installed in a vehicle, a driver can readily manipulate a menu, thereby contributing to improvement of the safety of travelling.

Moreover, in the menu display device according to the first aspect of the present invention, the operational commands may include a first fast forwarding command or a first rewinding command for moving the menu options one by one. The operational commands may include a page fast forwarding command or a page rewinding command for moving a predetermined number of options, out of the menu options, for each operation. The operational commands may include a command for performing fast forwarding or rewinding faster than the first fast forwarding command or the first rewinding command.

In the menu display device according to the first aspect of the present invention, fast forwarding or rewinding, page fast forwarding or page rewinding, and high-speed fast forwarding or high-speed rewinding may be provided as operational commands for menu options. A menu option can be efficiently searched for by displaying these operational commands corresponding to displayed menu options, thereby reducing time during which a driving operation is hindered to contribute to safe travelling.

Moreover, a second aspect of the present invention provides a menu display method performed by the menu display device according to the first aspect of the present invention. The menu display method according to the second aspect of the present invention includes extracting menu options from a storage unit, extracting operational commands corresponding to the menu options from the storage unit, and displaying a plurality of icons that indicate content of the menu options side by side at predetermined intervals on a screen of a display unit and displaying the operational commands at predetermined positions.

Moreover, the menu display method according to the second aspect of the present invention may further include, on a menu display screen on which the menu options and the operational commands are displayed, moving a mark that indicates that the menu options or the operational commands are in a selectable state in response to an amount of operation of an operation unit, and displaying, when the mark moves to the operational commands, new menu options on the display screen in response to the operational commands.

### BRIEF DESCRIPTION OF THE DRAWINGS

Fig. 1 is a block diagram showing the components of a menu display device according to a first embodiment of the present invention;
Fig. 2 shows an exemplary menu display screen according to a related art;
Fig. 3 shows an exemplary menu display screen in the menu display device according to the first embodiment, the menu display device including a rotary control;
Fig. 4A shows an exemplary menu display screen in the menu display device according to the first embodiment, the menu display device including a sliding key;
Fig. 4B shows an exemplary menu display screen in the menu display device according to the first embodiment, the menu display device including a touch panel;
Fig. 5 shows an exemplary menu display screen according to the first embodiment;
Fig. 6 is a flowchart showing exemplary menu display operations;
Fig. 7 shows an exemplary menu display screen in a menu display device according to a second embodiment, the menu display device including a rotary control;
Fig. 8A shows an exemplary menu display screen in the menu display device according to the second embodiment, the menu display device including a sliding key;
Fig. 8B shows an exemplary menu display screen in the menu display device according to the second embodiment, the menu display device including a touch panel; and
Fig. 9 shows an exemplary menu display screen according to the second embodiment.

### DESCRIPTION OF THE PREFERRED EMBODIMENTS

Embodiments of the present invention will now be described with reference to the attached drawings.

### (1) First Embodiment

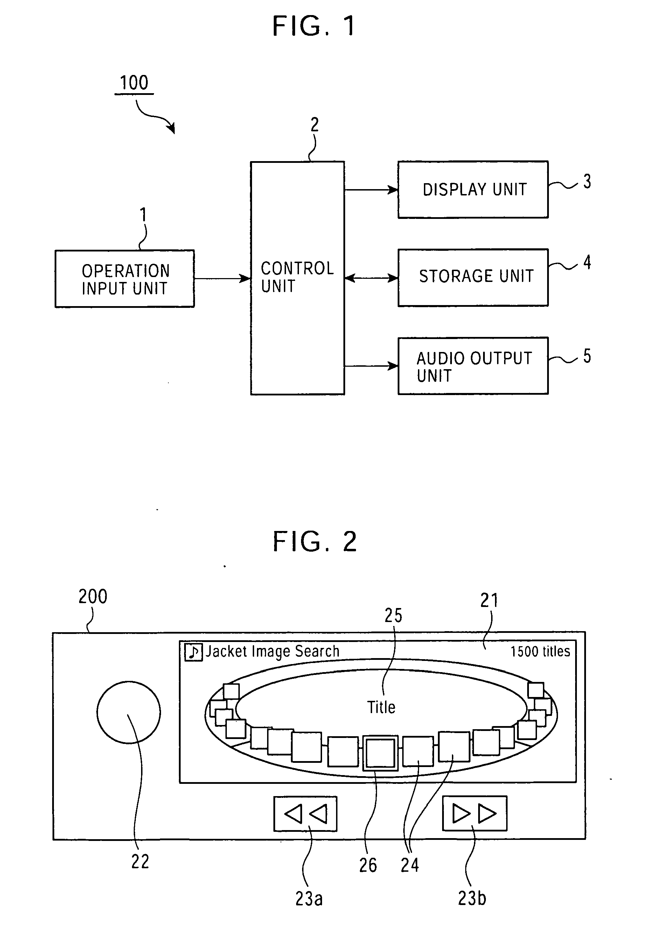

Fig. 1 is a block diagram showing the components of a menu display device 100 according to a first embodiment of the present invention. Basically, the menu display device 100 includes an operation input unit 1, a control unit 2, a display unit 3, a storage unit 4, and an audio output unit 5.

The operation input unit 1 includes, for example, a rotary control. For example, an instruction from a user to the menu display device 100 is input from the operation input unit 1. The rotary control includes a dial and a button and transmits a signal corresponding to the amount of rotation of the dial to the control unit 2. A function related to the first embodiment is moving menu options displayed on a menu screen, described below, in response to the amount of rotation. Specifically, icons for menu options disposed at predetermined intervals are moved by rotating the rotary control, with the respective orders of the icons in the sequence being kept. Moreover, a menu option is determined by pressing the button.

The display unit 3 includes, for example, an organic electroluminescence (EL) display or a liquid crystal panel. For example, menu options and information on an audio source that is being heard (for example, a tune title and an artist name) are displayed on the display unit 3.

The storage unit 4 includes, for example, a hard disk or a semiconductor memory. For example, hierarchically organized menu options, jacket images to be displayed on a menu screen, and arrangements of menu options are stored in the storage unit 4. Moreover, for example, the tune data of tunes obtained from media such as the Internet and compact disks (CDs) and music information data, such as artists of tunes and jacket images, in association with the tune data are stored in the storage unit 4.

The audio output unit 5 generates predetermined audio signals of a tune that is played back or the like and outputs the audio signals amplified to an appropriate level to a speaker (not shown) or the like under the control of the control unit 2.

The control unit 2 includes, for example, a microcomputer and controls processing in each of the aforementioned components on the basis of programs that are prepared in advance. Especially, as a function according to the first embodiment, the control unit 2 extracts menu options and operational commands stored in the storage unit 4, the operational commands controlling display of the menu options, and displays the extracted menu options and the extracted operational commands adjacent to the menu options.

In the menu display device 100, when display of a tune menu is requested, a menu screen is constructed on the basis of the data of jacket images and the like stored in the storage unit 4 to be displayed. On the menu screen, commands for manipulating menu options are displayed adjacent to an area where the menu options are displayed.

The control unit 2 of the menu display device 100 detects the amount of rotation of the rotary control to move, in response to the amount of rotation, a mark (hereinafter called a focus) indicating that a menu option is in a selectable state between menu options. When a desired menu option is displayed and when the menu option, on which the focus is put, is selected, the control unit 2 performs a function related to the menu option, for example, outputting music. Fast forwarding, rewinding, or the like of display of menu options is performed by further putting the focus on an operational command by moving the focus by rotating the rotary control.

In this manner, operational commands for controlling display of menu options, together with the menu options, are displayed at predetermined positions. Moreover, an arrangement in which only a single rotary control is used to select a desired option from a plurality of menu options displayed side by side is adopted. Thus, even when a driver is a user, since an operation unit necessary for a selection operation is a single rotary control, trouble caused by using a plurality of controls can be reduced, so that operations that hinder a driving operation can be prevented, thereby contributing to safe travelling

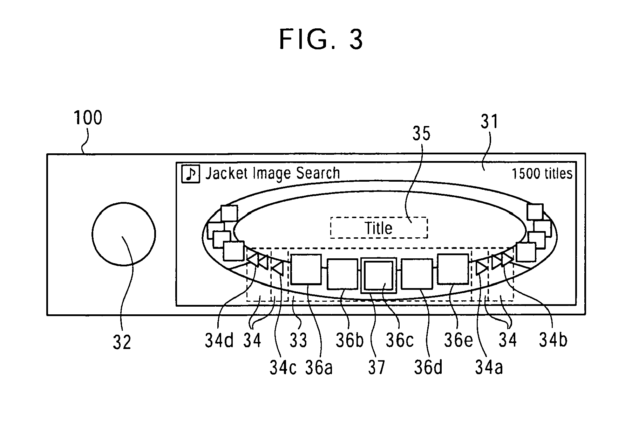

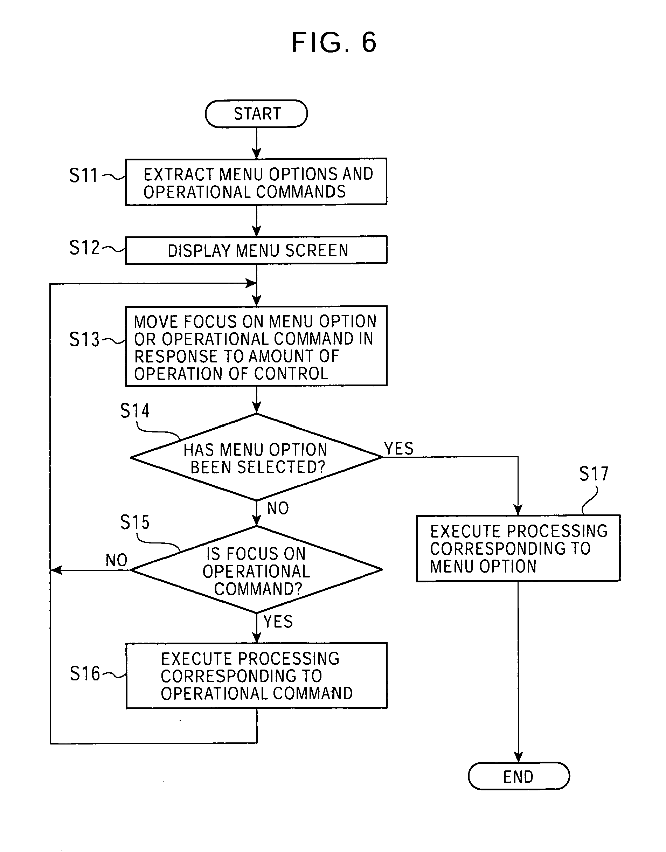

The menu display device 100 according to the first embodiment will next be described in detail with reference to Figs. 2 to 6. Fig. 2 shows a menu display device based on a related art for selecting a menu option using a plurality of controls. Figs. 3 to 5 show exemplary display of a menu screen of the menu display device 100 according to the first embodiment. Moreover, Fig. 6 is a flowchart showing exemplary menu display operations.

A menu display device 200 shown in Fig. 2 includes two types of controls, a rotary control 22 and operation buttons 23a and 23b. Fig. 2 shows an example in which menu options are manipulated using the rotary control 22 and the operation buttons 23a and 23b. The operation button 23a is a button for requesting rewinding of menu options. The operation button 23b is a button for requesting fast forwarding of menu options. Menu options 24 are expressed by, for example, icons in which jacket images are used and are displayed in a circle on a display screen 21. Moreover, a title 25 of an icon on which a focus 26 is put, out of the icons displayed in a circle, is displayed at the center of the display screen 21.

On such a menu screen, the focus 26 on an icon, which indicates a selectable state, is moved by rotating the rotary control 22. When the menu options 24 are fast-forwarded or rewound to search for a desired icon, a new menu is displayed by operating the operation buttons 23a and 23b, other than the rotary control 22. In this manner, different types of controls, the rotary control 22 and the operation buttons 23a and 23b, are used to select a desired icon. Thus, the usability is poor. Moreover, when only the rotary control 22 is used, the rotary control 22 needs to be rotated many times to select a desired icon. Thus, similarly, the usability is poor.

On the other hand, Fig. 3 shows an exemplary menu screen on which a tune menu is displayed on the menu display device 100 according to the first embodiment. The menu display device 100 includes a display screen 31 and a rotary control 32. The display screen 31 includes a menu option display area 33, operational command display areas 34, and a menu option information display area 35.

Options displayed on the menu option display area 33 and the operational command display areas 34 can be selected using the rotary control 32.

A predetermined number of menu options 36a to 36e are displayed on the menu option display area 33. For example, in the case of the tune menu shown in Fig. 3, five icons based on jacket images corresponding to tunes are displayed as the menu options 36a to 36e. Icons based on jacket images are displayed in a circle across the menu option display area 33 and other areas. Although menu options displayed outside the menu option display area 33 cannot be selected, it can be checked how far the menu options are located from the current selectable option.

Moreover, the operational command display areas 34 are provided adjacent to the menu option display area 33. Operational commands corresponding to menu options are displayed on the operational command display areas 34. In Fig. 3, the operational command display areas 34 are adjacent to the left and right ends of the menu option display area 33. Moreover, a first fast forwarding command 34a (a single rightward triangle mark in Fig. 3) and a second fast forwarding command 34b (two rightward triangle marks in Fig. 3) are displayed on two of the operational command display areas 34 on the right side of the menu option display area 33 as operational commands. A first rewinding command 34c (a single leftward triangle mark in Fig. 3) and a second rewinding command 34d (two leftward triangle marks in Fig. 3) are displayed on two of the operational command display areas 34 on the left side of the menu option display area 33 as operational commands. The first fast forwarding command 34a or the first rewinding command 34c is a command for fast-forwarding or rewinding the menu options 36a to 36e at a predetermined speed. The second fast forwarding command 34b or the second rewinding command 34d is a command for fast-forwarding or rewinding the menu options 36a to 36e faster than the first fast forwarding command 34a or the first rewinding command 34c.

When an icon that represents one of the menu options 36a to 36e or the operational commands 34a to 34d is enclosed in a frame (a focus frame 37) distinguishable from the other icons, this shows that the focus is put on the icon.

The focus frame 37 on a first icon displayed on the menu option display area 33 is moved to a second icon on the right or left side of the first icon by rotating the rotary control 32 in the right or left direction. When the focus frame 37 is on an icon (36a or 36e) at an end of the menu option display area 33, further rotation of the rotary control 32 causes the focus frame 37 to be moved from the menu option display area 33 to the operational command display areas 34. When the focus frame 37 is moved to the first fast forwarding command 34a, the menu options 36a to 36e are moved in a predetermined direction one by one, with the respective orders of the menu options 36a to 36e in the sequence being kept, to be displayed in turn so that the menu options 36a to 36e as a whole are rotated. At this time, a tune title corresponding to the icon 36c at the center of the menu option display area 33 is displayed on the menu option information display area 35. When the focus frame 37 is moved to the second fast forwarding command 34b by further rotating the rotary control 32, the movement speed of the menu options 36a to 36e is higher than that in a case where the focus frame 37 is put on the first fast forwarding command 34a.

When the focus frame 37 is moved to the menu option display area 33 by rotating the rotary control 32, movement of menu options is stopped, so that a desired icon can be selected. When the button of the rotary control 32 is pressed in a state in which the focus frame 37 is put on the menu options 36a to 36e, tune data linked to the icon is played back via the audio output unit 5, so that music is output through the speaker.

In the menu display device 100 according to the first embodiment, operational commands for manipulating menu options are displayed adjacent to an area where the menu options are displayed, as described above. The operational commands can be selected by operating a rotary control, as is the case with the menu options. Thus, a menu option can be readily and efficiently searched for and selected without using a plurality of operation units. When such a menu display device is installed in a vehicle, a driver can readily manipulate a menu, thereby contributing to improvement of the safety of travelling.

Regarding the aforementioned menu display device 100, the description is given, taking, for example, "fast forwarding" and "rewinding" of display of menu options as operational commands. Operational commands are not limited to these operational commands, and operational commands different from the "fast forwarding" command and the "rewinding" command described above may be provided.

For example, a "page fast forwarding" command and a "page rewinding" command for fast-forwarding and rewinding menu options page by page are provided. In this case, a "page" is a unit for collectively handling menu options. For example, it is assumed that a series of five menu options is a page. When "page fast forwarding" or "page rewinding" is performed, menu options are fast-forwarded or rewound five by five, so that new menu options are displayed.

In Fig. 3, the operational command 34a may be assumed to be a first page fast forwarding command, the operational command 34b may be assumed to be a second page fast forwarding command that is faster than the first page fast forwarding command, the operational command 34c may be assumed to be a first page rewinding command, and the operational command 34d may be assumed to be a second page rewinding command that is faster than the first page rewinding command.

In this case, necessary operational commands corresponding to the respective types of menu options are stored in a storage unit in advance, and the operational commands are displayed, referring to the storage unit.

Moreover, although four operational commands are set to appear in Fig. 3, the number of operational commands is not limited to four. For example, six operational commands may be set to appear. For example, a first fast forwarding command, a first rewinding command, a second fast forwarding command, a second rewinding command, a first page fast forwarding command, and a second page rewinding command may be set to appear at the same time. When many types of operational commands are provided adjacent to menu options in this manner, a user can efficiently search for a desired menu option by appropriately selecting an operational command.

Moreover, an "information display command" for displaying detailed information corresponding to a selected icon may be provided. In this case, an arrangement in which a focus is always put on an icon at the center of a menu display area, and the focus is put on another icon by rotating a rotary control is adopted. In this state, when the focus is moved to the "information display command" and then a button is pressed, detailed information and the like corresponding to the central icon can be displayed.

Regarding the aforementioned menu display device 100, the description is given, taking, for example, a case where the rotary control 32 is used as a control. However, the present invention is not limited to this arrangement. For example, a sliding key may be provided as a control, or a display screen may include a touch panel.

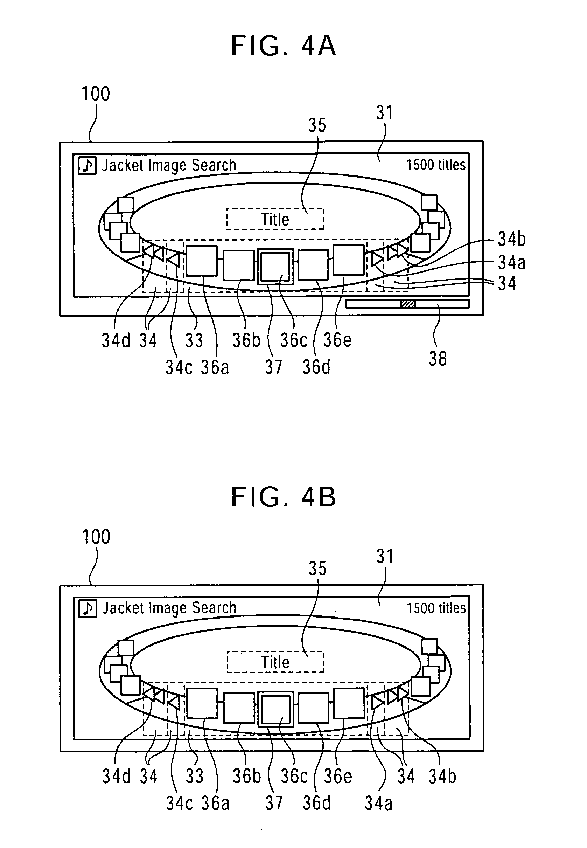

Fig. 4A is a diagram of the menu display device 100 including the display screen 31 in a case where a sliding key 38 is provided as a control. In the menu display device 100, when the sliding key 38 is moved in the left or right direction, the focus frame 37 is moved on the menu options 36a to 36e or the operational commands 34a to 34d in response to the amount of movement. When the focus frame 37 is moved to one of the operational commands 34a to 34d, for example, the menu options 36a to 36e are fast-forwarded or rewound in response to the operational command.

Moreover, Fig. 4B is a diagram of the menu display device 100 in a case where the display screen 31 includes a touch panel. A touch panel is provided on the display screen 31, and buttons combined with display content on the display screen 31 are provided. Each of the menu options or operational commands on the display screen 31 can be selected by touching the menu option or operational command. In Fig. 4B, for example, menu options are fast-forwarded or rewound in response to the operational commands 34a to 34d by touching an area where the operational commands 34a to 34d are displayed.

When fast forwarding, rewinding, or the like of display of menu options is being performed, a touch of the menu option display area 33 causes fast forwarding, rewinding, or the like of display of menu options to be stopped, and a touch of one of the menu options 36a to 36e on which the focus frame 37 is put causes an operation corresponding to the menu option, for example, outputting a tune in the case of a tune menu, to be performed.

Regarding the aforementioned menu display device 100, the description is given, taking, for example, a tune menu. However, the present invention is not limited to this arrangement, and similar menu display operations may be performed for each hierarchical level of hierarchically organized menus.

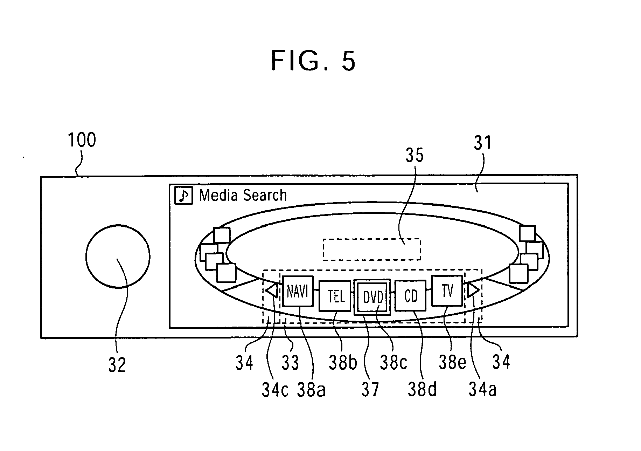

Fig. 5 shows an exemplary menu screen for selecting a source (a medium), for example, navigation, a digital versatile disk (DVD), or television (TV). Menu options 38a to 38e (NAVI, TEL, DVD, CD, and TV) are displayed on the menu option display area 33, and only two commands, the first fast forwarding command 34a and the first rewinding command 34c, are displayed as operational commands, as shown in Fig. 5. In the case of a menu for selecting a source, since the number of menu options corresponding to sources is not large, the frequency of use of high-speed fast forwarding, high-speed rewinding, page forwarding, or the like of menu options can be considered low. Thus, only fast forwarding and rewinding at a normal speed that is not a high speed are set as operational commands.

In the menu display operations, the focus frame 37 is moved on the menu options 38a to 38e and the operational commands 34a and 34c by operating a control such as the rotary control 32. When the focus frame 37 is moved to one of the operational commands 34a and 34c, a menu display operation corresponding to the operational command is performed.

In this case, since these menu options are upper level menu options of hierarchically organized menus, when one of the menu options on which the focus frame 37 is put is selected, lower level menu options that belong to the menu option are displayed in a manner similar to that in Fig. 3. When the number of the lower level menu options is large, for example, at least several tens of menu options, a high-speed fast forwarding command, a high-speed rewinding command, a page forwarding command, and the like are displayed, as operational commands, adjacent to the menu options.

Since the same interface is provided for menus at all hierarchical levels in this manner, a user can, for example, readily search for and select a menu. Moreover, since operational commands corresponding to menu options are provided, menu search can be efficiently performed without performing an unnecessary menu display operation.

### [Menu Display Method]

Menu display operations performed by the control unit 2 in the menu display device 100 according to the first embodiment will next be described. The description will be given, assuming that a tune menu is selected in the menu display operations. Moreover, it is assumed that a rotary control is used as a control.

In step S11, menu options and operational commands for displaying a tune menu are first extracted from the storage unit 4. The arrangement of the menu, information on menu options, and the like are stored in the storage unit 4 in advance. Moreover, operational commands for performing menu display operations corresponding to the menu options are stored in association with the menu options. The control unit 2 constructs a menu image by extracting information (the arrangement of menu options, jacket images, related operational commands, and the like) on a tune menu from a storage unit upon receiving a request to display a tune menu.

Then, in step S12, the options extracted in step S11 are displayed as menu options on a menu display screen, and the operational commands extracted in step S11 are displayed at predetermined positions on the menu display screen. Fig. 3 shows an exemplary menu display screen on which the menu options 36a to 36e and the operational commands 34a to 34d for controlling display of the menu options 36a to 36e are displayed. In Fig. 3, icons displayed on the menu option display area 33 are menu options, and icons displayed on the operational command display areas 34 adjacent to the both ends of the menu option display area 33 are operational commands. Moreover, in the initial state in which the menu shown in Fig. 3 is displayed, the focus frame 37 is put on the icon 36c displayed at the center of the menu option display area 33, and the icon 36c is in a selectable state.

Then, in step S13, the focus frame 37 is moved to the menu options 36a to 36e or the operational commands 34a to 34d in response to the amount of operation of the rotary control 32. When the rotary control 32 is rotated in the right direction, the focus frame 37 is moved in the right direction in Fig. 3. When the rotary control 32 is rotated in the left direction, the focus frame 37 is moved in the left direction in Fig. 3.

Then, in step S14, it is determined whether a menu option on which the focus frame 37 is put has been selected. When the button of the rotary control 32 has been pressed, it is determined that the menu option, on which the focus frame 37 is put, has been selected. When depression of the button of the rotary control 32 has not been detected, it is determined that no menu option has been selected. When the menu option has been selected, the process proceeds to step S17 where an operation corresponding to the menu option is performed. When no menu option has been selected, the process proceeds to step S15.

In step S15, it is determined whether the focus frame 37 is on the position of one of the operational commands 34a to 34d. When the focus frame 37 on one of the menu options 36a to 36e is moved by rotating the rotary control 32 in the right or left direction, so that the focus frame 37 is on the menu option 36a or 36e at an end of the menu option display area 33, further rotation of the rotary control 32 causes the focus frame 37 to be moved to the operational command 34c or 34a. For example, the control unit 2 detects the coordinates of a position where an operational command is displayed and the coordinates of the focus frame 37. When the coordinates of the focus frame 37 include the coordinates of the operational command, it is determined that the focus frame 37 has been moved to the operational command. When the focus frame 37 is on an operational command, the process proceeds to step S16. When the focus frame 37 is not on an operational command, the process returns to step S13 where the focus frame 37 is moved in response to the amount of operation of the rotary control 32.

In step S16, an operation corresponding to the operational command, on which the focus frame 37 is put, is performed to change display of menu options.

For example, when the focus frame 37 is put on a "fast forwarding" operational command, menu options are moved one by one in a manner in which the menu options are rotated in the right direction to be changed and displayed. At this time, the title of an icon located at the center of the menu option display area 33 may be displayed on the menu option information display area 35. Moreover, when the focus frame 37 is put on a "rewinding" operational command, menu options are moved one by one in a manner in which the menu options are rotated in a direction opposite the direction of the "fast forwarding" operational command to be changed and displayed. A title display operation is similar to that in the case of the "fast forwarding" operational command.

In this case, when the focus frame 37 is put on a "page forwarding" operational command as an operational command, a page of menu options (for example, five icons) are rotated together to be displayed on the menu option display area 33.

When the menu option has been selected in step S14, the process proceeds to step S17 where an operation corresponding to the menu option is performed. When a tune menu is subjected to operations like these menu display operations, a tune corresponding to a selected menu option is played back on the basis of music data to be output through the speaker, and a screen for displaying information on the tune is displayed, so that the menu display operations are completed.

While the menu display operations have been described, taking, for example, a case where a control is a rotary control, the same applies even when a control is a sliding key or a touch panel.

In the menu display method according to the first embodiment, menu options and operational commands corresponding to the menu options are extracted from a storage unit. Then, on a display screen, the menu options are displayed, and the operational commands are displayed adjacent to the menu options. Moreover, a focus for selecting a menu option, an operational command, and the like is moved using a single control. Thus, a menu option can be readily searched for and selected without using a plurality of controls.

### (2) Second Embodiment

A second embodiment is different from the first embodiment in that menu options are displayed in a list. Since the menu display device 100 according to the second embodiment is similar to that described in the first embodiment, the description is omitted here.

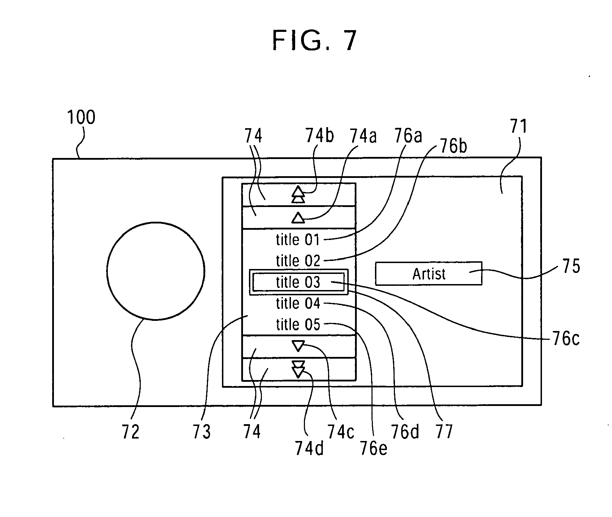

Fig. 7 shows an exemplary menu screen on which a tune menu is displayed on the menu display device 100 according to the second embodiment. The menu display device 100 includes a display screen 71 and a rotary control 72. The display screen 71 includes a menu option display area 73, operational command display areas 74, and a menu option information display area 75.

Options displayed on the menu option display area 73 and the operational command display areas 74 can be selected using the rotary control 72.

A predetermined number of menu options are displayed in a list in the vertical direction on the menu option display area 73. For example, in the case of the tune menu shown in Fig. 7, five icons indicating tune titles are displayed as menu options 76a to 76e.

Moreover, the operational command display areas 74 are provided adjacent to the menu option display area 73. Operational commands corresponding to menu options are displayed on the operational command display areas 74. In Fig. 7, the operational command display areas 74 are adjacent to the upper and lower ends of the menu option display area 73.

Moreover, a first fast forwarding command 74a (a single upward triangle mark in Fig. 7) and a second fast forwarding command 74b (two upward triangle marks in Fig. 7) are displayed on two of the operational command display areas 74 on the upper side of the menu option display area 73 as operational commands. A first rewinding command 74c (a single downward triangle mark in Fig. 7) and a second rewinding command 74d (two downward triangle marks in Fig. 7) are displayed on two of the operational command display areas 74 on the lower side of the menu option display area 73 as operational commands.

In this case, the respective functions of the first fast forwarding command 74a, the first rewinding command 74c, the second fast forwarding command 74b, and the second rewinding command 74d are similar to those of corresponding commands described in the first embodiment.

When an icon that represents one of the menu options 76a to 76e or the operational commands 74a to 74d is enclosed in a frame (a focus frame 77) distinguishable from the other icons, this shows that the focus is put on the icon.

The focus frame 77 on an icon displayed on the menu option display area 73 is moved in the upper or lower direction by rotating the rotary control 72 in the right or left direction on such a menu display screen. When the focus frame 77 is on an icon (76a or 76e) at an end of the menu option display area 73, further rotation of the rotary control 72 causes the focus frame 77 to be moved from the menu option display area 73 to the operational command display areas 74. When the focus frame 77 is moved to the first fast forwarding command 74a, the menu options 76a to 76e are moved in a predetermined direction one by one, with the respective orders of the menu options 76a to 76e in the sequence being kept, so that new menu options are displayed. At this time, an artist name corresponding to the icon 76c at the center of the menu option display area 73 is displayed on the menu option information display area 75. When the focus frame 77 is moved to the second fast forwarding command 74b by further rotating the rotary control 72, the movement speed of the menu options 76a to 76e is higher than that in a case where the focus frame 77 is put on the first fast forwarding command 74a.

When the focus frame 77 is moved to the menu option display area 73 by rotating the rotary control 72, movement of menu options is stopped, so that a desired icon can be selected. When a button of the rotary control 72 is pressed in a state in which the focus frame 77 is put on the menu options 76a to 76e, tune data linked to the icon is played back via the audio output unit 5, so that music is output through a speaker.

In the menu display device 100 according to the second embodiment, as is the case with the menu display device 100 according to the first embodiment, operational commands for manipulating menu options are displayed adjacent to an area where the menu options are displayed, as described above. The operational commands can be selected by operating a rotary control, as is the case with the menu options. Thus, a menu option can be readily and efficiently searched for and selected without using a plurality of operation units. When such a menu display device is installed in a vehicle, a driver can readily manipulate a menu, thereby contributing to improvement of the safety of travelling

Regarding the aforementioned menu display device 100, the description is given, taking, for example, "fast forwarding" and "rewinding" of display of menu options as operational commands. Operational commands are not limited to these operational commands. For example, a "page fast forwarding" command and a "page rewinding" command for fast-forwarding and rewinding menu options page by page are provided. In this case, a "page" is a unit for collectively handling menu options. For example, it is assumed that a series of five menu options is a page. When "page fast forwarding" or "page rewinding" is performed, menu options are fast-forwarded or rewound five by five, so that new menu options are displayed.

In Fig. 7, the operational command 74a may be assumed to be a first page fast forwarding command, the operational command 74b may be assumed to be a second page fast forwarding command that is faster than the first page fast forwarding command, the operational command 74c may be assumed to be a first page rewinding command, and the operational command 74d may be assumed to be a second page rewinding command that is faster than the first page rewinding command.

Moreover, although four operational commands are set to appear in Fig. 7, the number of operational commands is not limited to four. For example, six operational commands may be set to appear. For example, a first fast forwarding command, a first rewinding command, a second fast forwarding command, a second rewinding command, a first page fast forwarding command, and a second page rewinding command may be set to appear at the same time. When many types of operational commands are provided adjacent to menu options in this manner, a user can efficiently search for a desired menu option by appropriately selecting an operational command.

Moreover, an information display command for displaying detailed information corresponding to a selected icon may be provided. In this case, an arrangement in which a focus is always put on an icon at the center of a menu display area, and the focus is put on another icon by rotating a rotary control is adopted. In this state, when the focus is moved to the information display command and then a button is pressed, detailed information and the like corresponding to the central icon can be displayed.

Regarding the aforementioned menu display device 100, the description is given, taking, for example, a case where the rotary control 72 is used as a control. However, the present invention is not limited to this arrangement. For example, a sliding key may be provided as a control, or a display screen may include a touch panel.

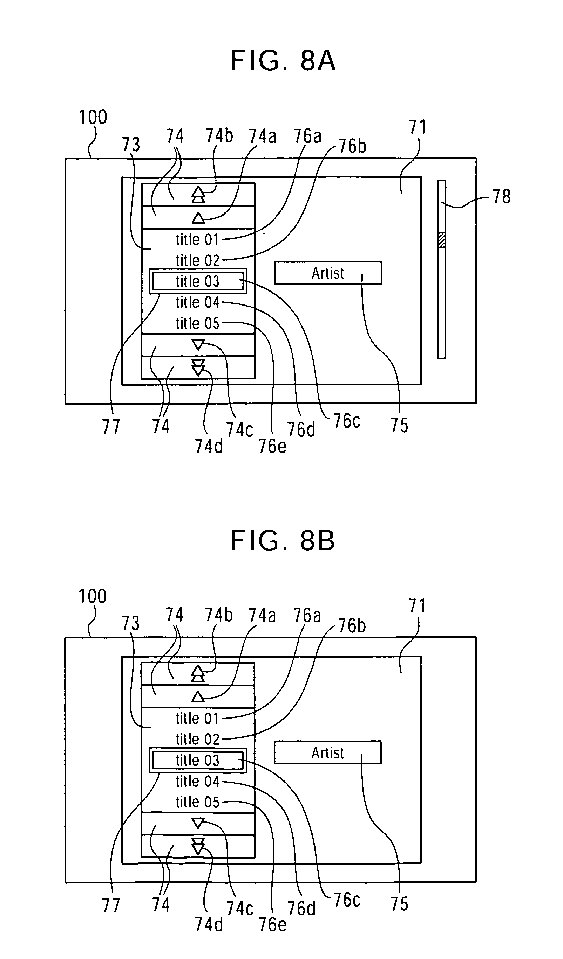

Fig. 8A is a diagram of the menu display device 100 including the display screen 71 in a case where a sliding key 78 is provided as a control. In the menu display device 100, when the sliding key 78 is moved in the upper or lower direction, the focus frame 77 is moved on the menu options 76a to 76e or the operational commands 74a to 74d in response to the amount of movement. When the focus frame 77 is moved to one of the operational commands 74a to 74d, for example, the menu options 76a to 76e are fast-forwarded or rewound in response to the operational command.

Moreover, Fig. 8B is a diagram of the menu display device 100 in a case where the display screen 71 includes a touch panel. A touch panel is provided on the display screen 71, and buttons combined with display content on the display screen 71 are provided. Each of the menu options or operational commands on the display screen 71 can be selected by touching the menu option or operational command. In Fig. 8B, for example, menu options are fast-forwarded or rewound in response to the operational commands 74a to 74d by touching an area where the operational commands 74a to 74d are displayed.

When fast forwarding, rewinding, or the like of display of menu options is being performed, a touch of the menu option display area 73 causes fast forwarding, rewinding, or the like of display of menu options to be stopped, and a touch of one of the menu options 76a to 76e on which the focus frame 77 is put causes an operation corresponding to the menu option, for example, outputting a tune in the case of a tune menu, to be performed.

Regarding the aforementioned menu display device 100, the description is given, taking, for example, a tune menu. However, the present invention is not limited to this arrangement, and similar menu display operations may be performed for each hierarchical level of hierarchically organized menus.

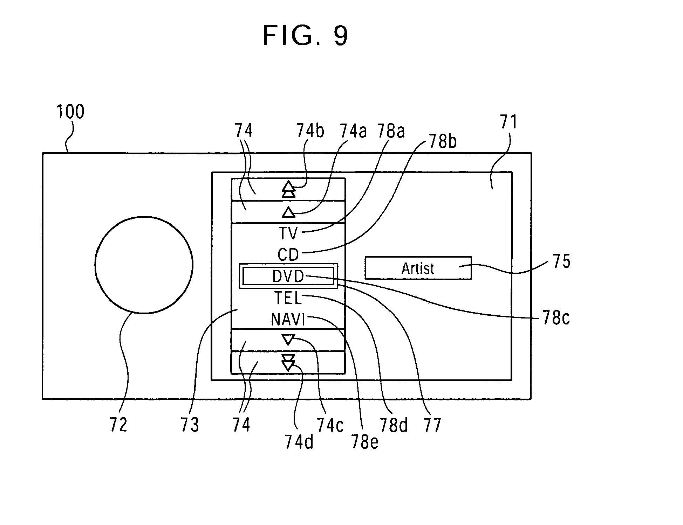

Fig. 9 shows an exemplary menu screen for selecting a source (a medium), for example, navigation, a DVD, or TV. Menu options 78a to 78e (NAVI, TEL, DVD, CD, and TV) are displayed on the menu option display area 73, and only two commands, the first fast forwarding command 74a and the first rewinding command 74c, are displayed as operational commands, as shown in Fig. 9.

In the menu display operations, the focus frame 77 is moved on the menu options 78a to 78e and the operational commands 74a and 74c by operating a control such as the rotary control 72. When the focus frame 77 is moved to one of the operational commands 74a and 74c, a menu display operation corresponding to the operational command is performed.

In this case, since these menu options are upper level menu options of hierarchically organized menus, when one of the menu options on which the focus frame 77 is put is selected, lower level menu options that belong to the menu option are displayed in a manner similar to that in Fig. 7. When the number of the lower level menu options is large, for example, at least several tens of menu options, a high-speed fast forwarding command, a high-speed rewinding command, a page forwarding command, and the like are displayed, as operational commands, adjacent to the menu options.

Since the same interface is provided for menus at all hierarchical levels in this manner, a user can, for example, readily search for and select a menu. Moreover, since operational commands corresponding to menu options are provided, menu search can be efficiently performed without performing an unnecessary menu display operation.

### [Menu Display Method]

Menu display operations performed by the control unit 2 in the menu display device 100 according to the second embodiment are basically similar to the menu display operations in the first embodiment.

However, since a menu display mode according to the second embodiment is different from that according to the first embodiment, a display operation according to the second embodiment is different from that according to the first embodiment. That is, when a menu display screen is generated in step S12, menu options are arranged in a list, and operational commands are set to be displayed on the upper and lower sides of the list, as shown in Fig. 7.

Moreover, in steps S13 and S15, a focus is set to be moved in the upper and lower directions to be put on the list and the operational commands in response to the amount of operation of a rotary control.

In the menu display operations according to the second embodiment, advantageous effects similar to those of the first embodiment can be achieved. That is, in the menu display operations according to the second embodiment, menu options and operational commands corresponding to the menu options are extracted from a storage unit. Then, on a display screen, the menu options are displayed, and the operational commands are displayed adjacent to the menu options. Moreover, a focus for selecting a menu option, an operational command, and the like is moved using a single control. Thus, a menu option can be readily searched for and selected without using a plurality of controls.

Further, the skilled person will be aware that individual features according to the first and second embodiment can be modified, exchanged, and/or combined with other features of both embodiments as far as appropriate for achieving corresponding effects.

## Claims

1. A menu display device that can display menu options, the menu display device comprising:
a display unit (3) that displays a plurality of menu options side by side on a display screen;
a storage unit (4) that stores the menu options and operational commands for specifying operations corresponding to the menu options; and
a control unit (2) that displays the menu options and displays the operational commands adjacent to the menu options, the operational commands controlling display of the menu options.

2. The menu display device according to Claim 1, further comprising:
an operation unit (1), wherein
the control unit (2) moves a mark that indicates a selectable state between the menu options or the operational commands in response to an amount of operation of the operation unit (1), and when the mark moves to the operational commands, the control unit (2) displays new menu options on the display screen in response to the operational commands.

3. The menu display device according to Claim 2, wherein the operation unit (1) is a rotary control, a sliding key, or a touch panel.

4. The menu display device according to Claim 2, wherein the menu options are moved in a predetermined direction in response to the operational commands, with respective orders of the menu options in sequence being kept, so that a plurality of new menu options are displayed side by side.

5. The menu display device according to Claim 2, wherein the menu options are expressed by icons that indicate content of the menu options, and the menu options are displayed so that the menu options are arranged in a list or a circle on a selectable menu display area.

6. The menu display device according to Claim 2, wherein the menu options are menu options at the same hierarchical level, out of hierarchically organized menu options.

7. The menu display device according to Claim 2, wherein the operational commands include a first fast forwarding command or a first rewinding command for moving the menu options one by one.

8. The menu display device according to Claim 7, wherein the operational commands include a command for performing fast forwarding or rewinding faster than the first fast forwarding command or the first rewinding command.

9. The menu display device according to Claim 2, wherein the operational commands include a page fast forwarding command or a page rewinding command for moving a predetermined number of options, out of the menu options, for each operation.

10. A method for displaying a menu comprising the following steps:
extracting menu options from a storage unit, extracting operational commands corresponding to the menu options from the storage unit, and displaying a plurality of icons that indicate content of the menu options side by side at predetermined intervals on a screen of a display unit and displaying the operational commands at predetermined positions.

11. The method of claim 10, further comprising:
on a menu display screen on which the menu options and the operational commands are displayed, moving a mark that indicates that the menu options or the operational commands are in a selectable state in response to an amount of operation of an operation unit, and displaying, when the mark moves to the operational commands, new menu options on the display screen in response to the operational commands.
